(19) Europäisches Patentamt
European Patent Office
Office européen des brevets

(11) **EP 2 432 660 B1**

(12) **FASCICULE DE BREVET EUROPEEN**

(45) Date de publication et mention
de la délivrance du brevet:
**01.05.2013 Bulletin 2013/18**

(21) Numéro de dépôt: **10728731.0**

(22) Date de dépôt: **10.05.2010**

(51) Int Cl.:
*B60R 1/00* *(2006.01)*   *B62D 15/02* *(2006.01)*
*G01S 11/12* *(2006.01)*   *G06K 9/00* *(2006.01)*
*G06T 7/20* *(2006.01)*

(86) Numéro de dépôt international:
**PCT/FR2010/050900**

(87) Numéro de publication internationale:
**WO 2010/133785 (25.11.2010 Gazette 2010/47)**

(54) **PROCEDE ET DISPOSITIF POUR ETENDRE UNE ZONE DE VISIBILITE**

VERFAHREN UND VORRICHTUNG ZUR ERWEITERUNG EINES SICHTBEREICHS

METHOD AND DEVICE FOR EXTENDING A VISIBILITY AREA

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **18.05.2009 FR 0953271**

(43) Date de publication de la demande:
**28.03.2012 Bulletin 2012/13**

(73) Titulaire: **Peugeot Citroën Automobiles Société
Anonyme
78140 Vélizy Villacoublay (FR)**

(72) Inventeur: **LARGE, Frédéric
F-78180 Montigny-Le-Bretonneux (FR)**

(74) Mandataire: **Fernandez, Francis Lionel
PSA Peugeot Citroën Automobiles SA.
Propriété Industrielle (LG081)
18, Rue des Fauvelles
92250 La Garenne-Colombes (FR)**

(56) Documents cités:
**EP-A1- 1 646 008        EP-A2- 1 094 337
EP-A2- 1 830 321        EP-A2- 1 964 719
DE-A1-102007 033 735**

## Description

L'invention concerne un procédé et un dispositif pour étendre une zone de visibilité obtenue au moyen d'une caméra montée sur un véhicule, notamment sur un véhicule automobile.

Particulièrement, le domaine de l'invention comprend les systèmes d'aide visuelle au recul (AVR), utilisant une ou plusieurs caméras. L'objectif de tels systèmes est d'aider le conducteur lors de manoeuvres à basse vitesse, en lui affichant une représentation visuelle intuitive de l'environnement proche autour du véhicule.

Un procédé comprenant les étapes du préambule de la revendication 1 et connu du document EP 1 830 321 A2.1

Le document EP1094337 divulgue un système destiné à assister un conducteur pendant une manoeuvre de stationnement en l'avertissant d'une présence d'objet tridimensionnel détecté au moyen d'un seul appareil de prise de vue. Le système divulgué a pour but de déterminer la distance qui sépare l'objet du véhicule à partir de deux prises successives d'image qui sont utilisées pour créer une vue stéréoscopique en fonction du déplacement du véhicule calculé à partir de capteurs.

Ce type de réalisation nécessite une très grande précision des capteurs. De plus, lors de déplacements à basse vitesse comme c'est généralement le cas au cours d'une manoeuvre, la faible distance parcourue par le véhicule entre deux prises d'image, pose des difficultés pour une reconstruction d'image tridimensionnelle car cela équivaut à un système stéréoscopique ayant une base très courte. Sauter des images jusqu'à obtenir une distance parcourue suffisante, pose le problème de la dynamique de l'environnement. Un objet en mouvement dans la scène ne peut pas être reconstruit. Une reconstruction suffisamment précise des obstacles, exige une puissance de calcul coûteuse. Enfin, et cela n'est pas le moindre des inconvénients, seuls les objets qui sont dans le champ de la caméra lors des deux prises de vue successives, peuvent être reconstruits.

Pour remédier aux inconvénients connus de l'état de la technique, un objet de l'invention est un procédé pour étendre une zone de visibilité obtenue au moyen d'une caméra montée sur un véhicule, comprenant :

- une étape de création d'une image virtuelle élémentaire dans laquelle un ensemble de pixels de l'image virtuelle élémentaire est mis en correspondance avec un ensemble de pixels d'une image réelle capturée par la caméra, en considérant que l'ensemble de pixels de l'image réelle reproduit une surface plane du monde réel ;
- une étape de caractérisation de l'image virtuelle élémentaire dans laquelle un ensemble de points d'intérêt de l'image virtuelle élémentaire est généré ;
- une étape de construction d'une image virtuelle cumulative dans laquelle au moins une partie de l'image virtuelle élémentaire est superposée sur au moins une partie de l'image virtuelle cumulative en faisant coïncider des points d'intérêt de l'image virtuelle élémentaire avec des points d'intérêt de l'image virtuelle cumulative.

Selon l'invention l'étape de construction, est réitérée pour chaque nouvelle image virtuelle élémentaire suffisamment différente d'une ancienne image virtuelle élémentaire en termes de distances entre les points d'intérêt et

le procédé comprend une étape de différentiation dans laquelle on opère une différence en termes de composantes de couleur entre chaque pixel de la nouvelle image virtuelle élémentaire et un pixel correspondant de l'ancienne image virtuelle élémentaire et dans laquelle on attribue audit pixel de la nouvelle image virtuelle élémentaire, un niveau de transparence qui est fonction de ladite différence.

Avantageusement aussi, dans l'étape de création, l'ensemble de pixels de l'image virtuelle élémentaire est mis en correspondance avec l'ensemble de pixels de l'image réelle par une table de correspondance.

Avantageusement encore, le procédé comprend une étape d'affichage dans laquelle l'image virtuelle élémentaire telle qu'elle résulte de l'étape de création est superposée en temps réel sur l'image virtuelle cumulative pour générer une image instantanée d'affichage.

Particulièrement dans l'étape d'affichage, une image de synthèse est superposée à l'image virtuelle cumulative.

Plus particulièrement, l'image de synthèse est celle d'une roue du véhicule.

Plus particulièrement encore, l'étape d'affichage est activée directement après l'étape de caractérisation de l'image virtuelle élémentaire pour chaque nouvelle image virtuelle élémentaire équivalente à une ancienne image virtuelle élémentaire en termes de distances entre les points d'intérêt.

De préférence, la surface plane est celle du sol.

Plus précisément, la caméra utilisée comprend un plan rétinien oblique par rapport à ladite surface plane du monde réel.

Un objet de l'invention est aussi un dispositif comprenant une caméra montée sur un véhicule, caractérisé en ce qu'il est agencé pour mettre en oeuvre le procédé selon l'invention.

D'autres caractéristiques et avantages de l'invention ressortiront plus clairement de la description qui en est faite ci-après, à titre indicatif et nullement limitatif, en référence aux dessins annexés, dans lesquels :

- la figure 1 est une vue en perspective d'un véhicule en phase de manoeuvre ;

- la figure 2 est une vue de dessus du véhicule de la figure 1 ;
- la figure 3 montre des étapes de procédé conforme à l'invention ;
- la figure 4 est un schéma explicatif des propriétés physiques utilisées ;
- la figure 5 est une vue schématique de dispositif conforme à l'invention.

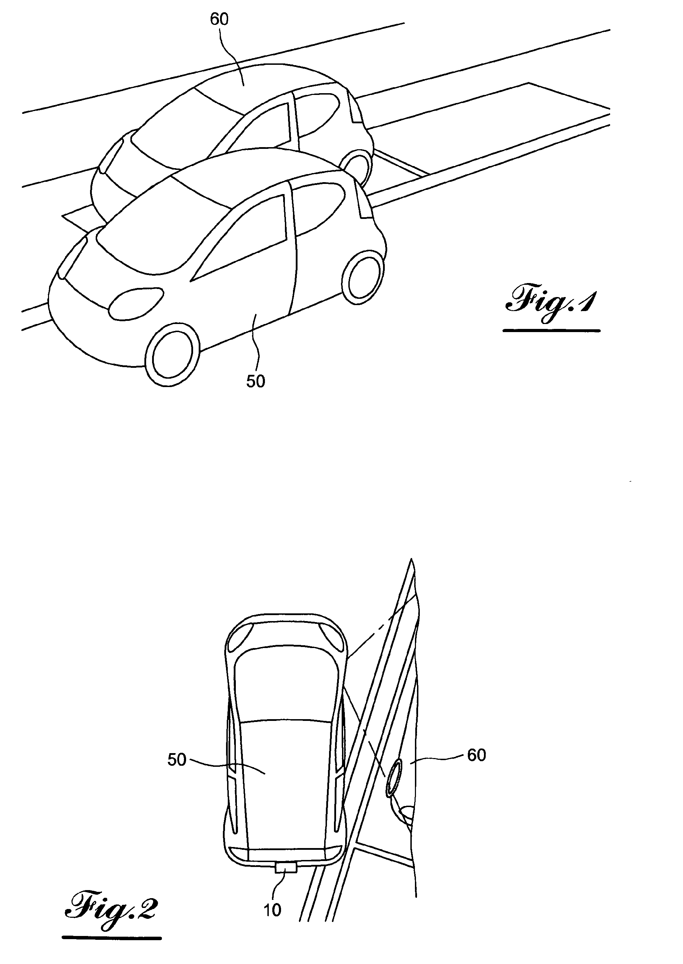

La figure 1 montre un véhicule 50 en phase de manoeuvre à proximité d'un véhicule 60.

La figure 2 montre le véhicule 50 équipé d'une caméra 10 à l'arrière.

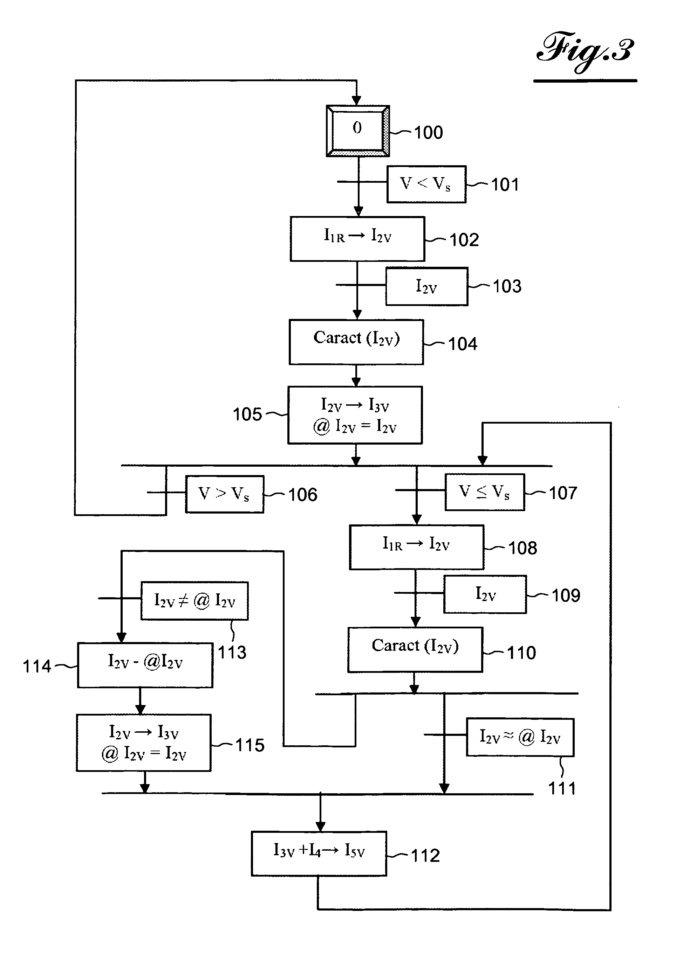

Le procédé à présent expliqué en référence à la figure 3, part d'une étape initiale 100 dans laquelle le système, lorsqu'il est mis en marche, est en attente tant que la vitesse V du véhicule est supérieure à une vitesse de seuil $V_S$. En effet, le procédé et le système conformes à l'invention étant prévu pour aider le conducteur à manoeuvrer, il n'est pas nécessairement utile de les faire fonctionner lorsque le véhicule est en route.

A partir de l'étape 100, une détection de vitesse V en dessous de la vitesse de seuil $V_S$ valide une transition 101 qui active une étape 102.

L'étape 102 consiste à capturer une image réelle $I_{1R}$ de l'espace couvert par le champ de la caméra 10 à l'arrière du véhicule 50, de façon à créer par projection, une vue de dessus du sol situé derrière le véhicule dans le champ de la caméra.

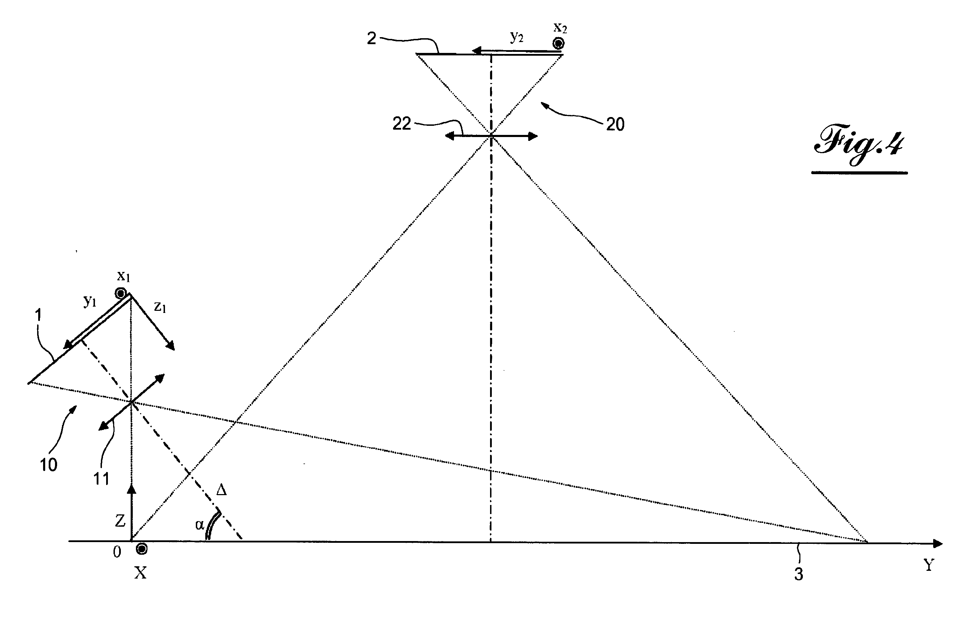

Sur la figure 4, on a représenté un système optique 11 et un plan rétinien 1 de la caméra réelle 10 sur lequel se forme une image réelle $I_{1R}$ du sol 3. Un axe $\Delta$ perpendiculaire au plan rétinien 1, passe par le centre optique du système optique 11. Un repère $o_1x_1y_1z_1$ lié au plan rétinien 1, a son axe $z_1$ parallèle à l'axe $\Delta$ orienté vers le sol 3 et son origine $o_1$ à une hauteur $A_1$ au dessus du sol de valeur constante qui résulte du montage de la caméra 10 sur le véhicule 50. Un repère OXYZ lié au véhicule, a son origine O au niveau du sol à la verticale de l'origine $o_1$, son axe X parallèle à l'axe $x_1$ horizontal et son axe Y horizontal perpendiculairement à l'axe X. L'axe $\Delta$ fait un angle $\alpha$ avec le plan du sol.

Les coordonnées homogènes $w_1u_1$, $w_1v_1$, $w_1$ dans un plan projectif du repère $o_1x_1y_1z_1$ à $z_1=0$, sont liées aux coordonnées $u_1$, $v_1$ des points de l'image réelle sur le plan rétinien par le coefficient de proportionnalité $w_1$. En appliquant à la caméra 10, le modèle du sténopé, les coordonnées homogènes $w_1u_1$, $w_1v_1$, $w_1$ de chaque point de l'image correspondant à un point au niveau du sol de coordonnées X, Y, 0 dans le repère OXYZ, sont données par une transformation de type connu :

$$
\begin{pmatrix} w_1u_1 \\ w_1v_1 \\ w_1 \end{pmatrix} = \begin{bmatrix} \Gamma_{1u} & \sigma_{uv} & c_{1u} \\ 0 & \Gamma_{1v} & c_{1v} \\ 0 & 0 & 1 \end{bmatrix} \begin{bmatrix} f_1 & 0 & 0 & 0 \\ 0 & f_1 & 0 & 0 \\ 0 & 0 & 1 & 0 \end{bmatrix} \begin{bmatrix} 1 & 0 & 0 & 0 \\ 0 & -\sin\alpha & -\cos\alpha & 0 \\ 0 & \cos\alpha & -\sin\alpha & -A_1 \\ 0 & 0 & 0 & 1 \end{bmatrix} \begin{pmatrix} X \\ Y \\ 0 \\ 1 \end{pmatrix}
$$

Dans cette transformation, les coefficients $\Gamma_{1u}$ et $\Gamma_{1v}$ sont les facteurs d'agrandissement de l'image. On peut attribuer une valeur nulle au coefficient $\sigma_{uv}$ lorsque les lignes et les colonnes de cellules électroniques photosensibles qui composent le capteur de la caméra, sont orthogonales. Les coordonnées $c_{1u}$ et $c_{1v}$ de la projection du centre optique de la caméra sur le plan image, sont celles de l'intersection de l'axe $\Delta$ avec le plan rétinien 1. Le coefficient $f_1$ représente la distance focale de la caméra 10. La caméra est fixée sur le véhicule avec un angle de visée constant vers le sol de façon à donner des valeurs constantes aux coefficients de la transformation.

En multipliant les trois matrices ci-dessus, la transformation peut encore s'écrire :

$$
\begin{pmatrix} w_1u_1 \\ w_1v_1 \\ w_1 \end{pmatrix} = \begin{bmatrix} m_{1uX} & m_{1uY} & m_{1uZ} & m_{1u} \\ m_{1vX} & m_{1vY} & m_{1vZ} & m_{1v} \\ m_{1wX} & m_{1wY} & m_{1wZ} & m_{1w} \end{bmatrix} \begin{pmatrix} X \\ Y \\ 0 \\ 1 \end{pmatrix}
$$

En développant les calculs, la valeur du coefficient de proportionnalité $w_1$ est donnée par la formule :

$$w_1 = Y\cos\alpha - A_1$$

A chaque point de coordonnées $u_1$, $v_1$ dans l'image réelle $I_{1R}$ correspond alors un et un seul point de coordonnées X, Y dans le plan du sol.

Sur la figure 4, on a aussi représenté un système optique 21 et un plan rétinien 2 d'une caméra virtuelle 20, sur lequel est formée une image virtuelle $I_{2V}$ du sol 3. Un axe perpendiculaire au plan rétinien 2 et au plan du sol 3, passe par le centre optique du système optique 21. Un repère $o_2x_2y_2z_2$ lié au plan rétinien 2, a son plan $z_2=0$ parallèle au plan du sol 3 et son origine $o_2$ à une hauteur $A_2$ au dessus du sol de valeur constante de façon à embrasser la même surface au sol que la caméra 10.

De même que pour la caméra réelle 10, les coordonnées homogènes $w_2u_2$, $w_2v_2$, $w_2$ dans un plan projectif du repère $o_2x_2y_2z_2$ à $z_2=0$, sont liées aux coordonnées $u_2$, $v_2$ des points de l'image virtuelle sur le plan rétinien par le coefficient de proportionnalité $w_2$. En appliquant aussi à la caméra 20, le modèle du sténopé, les coordonnées homogènes $w_2u_2$, $w_2v_2$, $w_2$ de chaque point de l'image correspondant à un point au niveau du sol de coordonnées X, Y, 0 dans le repère OXYZ, sont données par une transformation semblable à celle précédemment expliquée.

$$\begin{pmatrix} w_2u_2 \\ w_2v_2 \\ w_2 \end{pmatrix} = \begin{bmatrix} m_{2uX} & m_{2uY} & m_{2uZ} & m_{2u} \\ m_{2vX} & m_{2vY} & m_{2vZ} & m_{2v} \\ m_{2wX} & m_{2wY} & m_{2wZ} & m_{2w} \end{bmatrix} \begin{pmatrix} X \\ Y \\ 0 \\ 1 \end{pmatrix}$$

En développant les calculs, la valeur du coefficient de proportionnalité $w_1$ est donnée par la formule :

$$w_2 = -A_2$$

A chaque point de coordonnées X, Y dans le plan du sol correspond alors un et un seul point de coordonnées $u_2$, $v_2$ dans l'image virtuelle $I_{2V}$.

Par transitivité des bijections, à chaque point de coordonnées $u_1$, $v_1$ dans l'image réelle $I_{1R}$ correspond alors un et un seul point de coordonnées $u_2$, $v_2$ dans l'image virtuelle $I_{2V}$ et réciproquement.

Ainsi, chaque composante de couleur d'une surface élémentaire $dS_2$ constituée de points de coordonnées planaires $u_2$, $v_2$ dans l'image virtuelle $I_{2V}$, est égale à la même composante de couleur d'une surface élémentaire $dS_1$ constituée des points de coordonnées planaires $u_1$, $v_1$ correspondants dans l'image réelle $I_{1R}$.

Lorsque les ressources de calcul le permettent, les points de coordonnées planaires $u_1$, $v_1$ correspondants sont calculés à partir des transformations précédemment expliquées et chaque composante de couleur intégrée sur la surface élémentaire $dS_1$ comprenant ces points, est attribuée à la surface élémentaire $dS_2$ constituée de points de coordonnées planaires $u_2$, $v_2$ dans l'image virtuelle $I_{2V}$.

On notera que les paramètres des caméras étant fixés, les correspondances entre points de l'image virtuelle $I_{2V}$ et de l'image réelle $I_{1R}$ sont constantes.

De façon avantageuse, l'invention prévoit une table de correspondance à une entrée indexée par les coordonnées linéaires $k_2$ des pixels de l'image virtuelle $I_{2V}$. On rappelle que, l'image virtuelle $I_{2V}$ comprenant $H_2$ lignes de $L_2$ pixels par ligne, un pixel d'indice j sur une ligne d'indice i, est référencé par une coordonnée linéaire $k_2$ telle que :

$$k_2 = iL_2 + j$$

A chaque entrée indexée par $k_2$ est associée la coordonnée linéaire $k_1$ d'un pixel de l'image réelle $I_{1R}$ comprenant le point de coordonnées planaires $u_1$, $v_1$ qui correspond au point de coordonnées planaires $u_2$, $v_2$ sur lequel est centré le pixel de coordonnée linéaire $k_2$.

Cette table de correspondance permet des économies en termes de ressources matérielles et en termes d'exécution. En termes de ressources matérielles, la table de correspondance peut résider dans un emplacement mémoire comprenant simplement L*H cases mémoires pour les coordonnées linéaires $k_2$ et L*H cases mémoires pour

les coordonnées linéaires $k_1$ associées. En termes de ressources d'exécution, un simple balayage des entrées de la table de correspondance suffisant pour définir les pixels de l'image virtuelle en se référant aux pixels de l'image réelle correspondants, est remarquablement rapide.

A partir de l'étape 102 représentée sur la figure 3, l'obtention de l'image virtuelle $I_{2V}$ valide une transition 103 qui active une étape 104.

L'étape 104 consiste à déterminer des points d'intérêt qui caractérisent l'image virtuelle $I_{2V}$. Différentes méthodes peuvent être utilisées pour déterminer les points d'intérêt. On connaît par exemple les points d'intérêt de type Harris qui sont liés à des points singuliers de l'image tel que par exemple, un coin de trottoir. L'algorithme de Harris et Stephen a le mérite d'être simple et rapide. D'autres algorithmes plus complexes ont le mérite d'être plus robustes en offrant une meilleure immunité aux bruits, aux variations d'éclairage et aux variations brutales de cadrage.

A titre d'exemple purement illustratif et non limitatif, on peut citer les méthodes de détection d'hétérogénéité locale (blob détection en anglais) qui se répartissent en méthodes différentielles et en méthode à extrema locaux. Considérant une composante de couleur ayant la valeur $F(u_2, v_2)$ pour un pixel de coordonnées $u_2$, $v_2$, et un filtre gaussien de valeur $G(u_2, v_2, \sigma)$ donné par une formule du type :

$$G(u_2, v_2, \sigma) = \frac{1}{2\pi\sigma} e^{-\frac{u_2 + v_2}{2\sigma}}$$

dans laquelle $\sigma$ est un facteur d'échelle, le système génère une représentation tridimensionnelle à deux dimensions spatiales et à une dimension d'échelle $L(u_2, v_2, \sigma)$ donnée par le produit de convolution :

$$L(u_2, v_2, \sigma) := G(u_2, v_2, \sigma) * F(u_2, v_2)$$

Le système mémorise ensuite les coordonnées $u_2$, $v_2$, de chaque pixel et le facteur d'échelle $\sigma$ qui correspondent à un extremum local du Laplacien $\Delta(L)$ de L :

$$\Delta L(u_2, v_2, \sigma) := \frac{\partial_2 L(u_2, v_2, \sigma)}{\partial u_2^2} + \frac{\partial_2 L(u_2, v_2, \sigma)}{\partial v_2^2}$$

L'étape 104 produit ainsi une liste de points d'intérêt de l'image virtuelle comprenant les pixels de coordonnées $u_2$, $v_2$, avec le facteur d'échelle correspondant à un extremum du Laplacien, c'est-à-dire un maximum ou un minimum, voire un maximum dans une direction et un minimum dans une autre direction.

Dans l'étape 105 qui suit, une image virtuelle $I_{3V}$ est créée en mémoire. L'image virtuelle $I_{3V}$ est destinée à représenter une vue de dessus de l'environnement du véhicule qui va au-delà de la surface couverte par l'image virtuelle instantanée $I_{2V}$. Au départ, l'image virtuelle $I_{3V}$ comprend simplement la première image virtuelle instantanée $I_{2V}$ qui vient d'être calculée. Conformément à l'invention, l'image virtuelle $I_{3V}$ va être construite dans les étapes suivantes au fur et à mesure du déplacement du véhicule.

Les étapes suivantes 108 à 112, sont exécutées en temps réel, sous le contrôle d'une transition 107, tant que la vitesse V du véhicule est inférieure à la vitesse de seuil $V_S$ et bien entendu tant que le procédé est activé. Le procédé est par exemple désactivé par retrait de la clé de contact.

Une détection de vitesse V supérieure à la vitesse de seuil, valide une transition 106 qui réactive l'étape 100, remettant ainsi le système en état de veille.

Une détection de vitesse V inférieure ou égale à la vitesse de seuil, valide la transition 107 qui active une étape 108.

A chaque exécution de l'étape 108, une nouvelle image réelle $I_{1R}$ est capturée au moyen de la caméra 10. Une nouvelle image virtuelle $I_{2V}$ du sol en vue de dessus, est produite à partir de l'image réelle $I_{1R}$ comme expliqué ci-dessus à propos de l'étape 102.

A partir de l'étape 108 représentée sur la figure 3, l'obtention de l'image virtuelle $I_{2V}$ valide une transition 109 qui active une étape 110.

L'étape 110 consiste à déterminer des points d'intérêt qui caractérisent la nouvelle image virtuelle $I_{2V}$. comme expliqué ci-dessus à propos de l'étape 104. La nouvelle image virtuelle $I_{2V}$ est comparée à une ancienne image virtuelle @$I_{2V}$. L'ancienne image virtuelle @$I_{2V}$ est la dernière image virtuelle $I_{2V}$ qui a été intégrée dans l'image virtuelle $I_{3V}$ lors de l'exécution de l'étape 105 ou lors d'une exécution précédente d'une étape 115 expliquée ci-après. La nouvelle image virtuelle $I_{2V}$ est considérée équivalente à l'ancienne image virtuelle @$I_{2V}$ tant que la distance entre chaque point d'intérêt de l'ancienne image virtuelle @I$_{2V}$ et le point d'intérêt qui lui correspond dans la nouvelle image virtuelle I$_{2V}$ est inférieure à une valeur de seuil prédéterminée. La distance peut concerner une distance euclidienne sur la situation des pixels dans le plan de l'image. La distance peut aussi concerner une différence de niveau entre une composante de couleur du point d'intérêt de l'ancienne image virtuelle @I$_{2V}$ et la même composante de couleur du point d'intérêt qui lui correspond dans la nouvelle image virtuelle I$_{2V}$. La nouvelle image virtuelle I$_{2V}$ est considérée différente de l'ancienne image virtuelle @I$_{2V}$ dès que la distance entre un ou plusieurs points d'intérêt de l'ancienne image virtuelle @I$_{2V}$ et les points d'intérêt qui leur correspondent dans la nouvelle image virtuelle I$_{2V}$ est supérieure à la valeur de seuil prédéterminée.

Une transition 111, validée lorsque la nouvelle image I$_{2V}$ est équivalente à l'ancienne image @I$_{2V}$, active une étape 112. Les images virtuelles sont équivalentes tant que le véhicule s'est peu ou pas déplacé. Il convient alors de ne pas prendre en compte la nouvelle image virtuelle car des modifications faibles au fil de l'eau risqueraient de provoquer une dérive par accumulation d'erreurs successives.

Une transition 113, validée lorsque la nouvelle image I$_{2V}$ est différente de l'ancienne image @I$_{2V}$, active une étape 114. Typiquement, les images virtuelles sont nettement différentes lorsque le véhicule a suffisamment avancé, reculé ou braqué.

L'étape 114 consiste à évaluer la différence entre la nouvelle image virtuelle I$_{2V}$ et l'ancienne image virtuelle @I$_{2V}$ de façon à superposer un plus grand nombre possible de points d'intérêt de la nouvelle image virtuelle I$_{2V}$ sur les points d'intérêt correspondant de l'ancienne image virtuelle @I$_{2V}$. Par exemple des déplacements de points d'intérêt dans l'image virtuelle suivant une direction commune avec des valeurs communes, dénote un mouvement du véhicule en translation dans un sens opposé à celui des points d'intérêt dans la nouvelle image virtuelle. Par exemple encore, des déplacements de points d'intérêt dans l'image virtuelle suivant des directions différentes avec des valeurs différentes, dénote un mouvement du véhicule en rotation ou sur un arc de courbe dans un sens opposé à celui des points d'intérêt dans la nouvelle image virtuelle.

Pour calculer la transformation affine qui fait passer de l'ancienne image virtuelle @I$_{2V}$ à la nouvelle image virtuelle I$_{2V}$, on considère que les points d'intérêt appartiennent à une scène plane qui est rigide. En d'autres termes, un point d'intérêt qui appartient à une partie de la nouvelle image virtuelle I$_{2V}$ qui se superpose sur l'ancienne image virtuelle @I$_{2V}$, a un point d'intérêt combiné dans l'ancienne image virtuelle @I$_{2V}$ et les deux points d'intérêt sont positionnés sur un même élément de la scène. Cependant, à cause de bruits, de points d'intérêt qui ne vérifient les hypothèses de la scène plane ou d'autres phénomènes, un point d'intérêt d'une image virtuelle peut ne pas avoir de point d'intérêt combiné dans l'autre image virtuelle qui correspond à un élément du sol ou à un même élément. De tels points d'intérêt, considérés aberrants (outliers en anglais), ne sont pas pris en compte pour la superposition des deux images virtuelles.

Après superposition de la nouvelle image virtuelle sur l'ancienne image virtuelle de façon à faire coïncider les points d'intérêt, on distingue une première partie de la nouvelle image virtuelle qui sort du cadre de l'ancienne image virtuelle et une deuxième partie de la nouvelle image virtuelle qui recouvre partiellement l'ancienne image virtuelle. Ce recouvrement partielle résulte du déplacement du véhicule. La première partie servira à étendre la portée de l'image virtuelle cumulative I$_{3V}$. Les pixels de la première partie ne correspondent à aucun pixel de l'ancienne image virtuelle @I$_{2V}$ et pourront donc être intégrés tels quels dans l'image virtuelle cumulative I$_{3V}$.

Chaque pixel de la deuxième partie de la nouvelle image virtuelle I$_{2V}$ se superpose sur un pixel de l'ancienne image virtuelle @I$_{2V}$, idéalement avec des composantes de couleur RVB ou de teinte et de luminosité de valeur identique.

Cependant la réalité peut s'éloigner de la situation idéale pour plusieurs raisons. Une première raison est que l'hypothèse d'un sol parfaitement plan à l'arrière du véhicule, sur laquelle se base la construction de l'image virtuelle I$_{2V}$, n'est pas toujours vérifiée. Un obstacle qui dépasse du sol ou s'enfonce dans le sol, ne vérifie pas la transformation à solution unique qui résulte de Z nul. Un même point de cet obstacle apparaît avec des coordonnées qui ne concordent pas dans les deux images virtuelles. Réciproquement un pixel, correspondant à un point considéré dans le plan alors qu'il sort du plan du sol dans une image virtuelle, correspond à un autre point dans l'autre image virtuelle.

Pour tenir compte de ce type d'hétérogénéité, une solution possible consiste à évaluer la distance qui sépare les deux pixels en termes de composantes de couleur, de teinte ou de luminosité. La distance entre deux pixels superposés, peut être mesurée dans un espace à une dimension des niveaux de gris ou dans un espace à trois dimensions de couleurs RVB (rouge vert bleu), TSV (teinte, saturation, valeur de brillance) ou autre.

Une deuxième raison est que même pour des pixels représentatifs de points dans le plan du sol, les pixels amènent une discrétisation qui fait que deux pixels représentatifs d'un même point, ne se superposent parfaitement que lorsque le déplacement du véhicule entre deux prises de vues, correspond à un nombre entier de pixels, ce qui est rarement le cas. Pour répondre à cette deuxième raison et par voie de conséquence, à la première raison évoquée ci-dessus, l'invention prévoit avantageusement de faire une mesure de corrélation entre une première fenêtre centrée sur le pixel dans l'ancienne image virtuelle et une deuxième fenêtre centrée sur le pixel superposable dans la deuxième image virtuelle. La corrélation est alors représentative du pixel dans son environnement.

De façon à gagner en temps de traitement, la différence basée sur le coefficient de corrélation entre les deux fenêtres, est calculée par une approche multi-résolution, encore nommée pyramidale. L'analogie avec une pyramide est la suivante pour chaque image virtuelle. A la base de la pyramide se trouve l'image virtuelle avec sa résolution d'origine. A chaque niveau supérieur, la résolution de l'image est diminuée. Généralement le nombre de pixel est divisé par deux sur la longueur et par deux sur la largeur de l'image.

La distance ainsi calculée entre deux pixels, est une valeur numérique dont les minima et les maxima sont fixés. La plage de valeurs définie par ces minima et ces maxima est ensuite ramenée par mise à l'échelle et seuillage des valeurs hautes, à une plage de valeurs comprises entre 0 en absence de différence et 255 pour une différence totale. La valeur ainsi calculée, est utilisée comme valeur de transparence de chaque pixel en vue de son ajout à l'image virtuelle cumulative $I_{3V}$ sous forme de mosaïque. Un pixel, au sens où il est défini dans le présent procédé, est caractérisé par sa position dans l'image, sa couleur et sa transparence, nulle par défaut qui s'applique à un pixel opaque. Le codage de la transparence est purement conventionnel sans incidence sur son traitement. Dans l'exemple de mise en oeuvre de l'invention ici décrite, un pixel dont la valeur de transparence est maximale à 255, est totalement transparent et n'apparaît pas lorsqu'il est superposé sur un autre pixel, un pixel dont la valeur de transparence est minimale à 0, est parfaitement opaque et masque le pixel sur lequel il est superposé. Les conventions peuvent être différentes, voire inversées comme c'est le cas dans la méthode « Alpha blending ».

A la suite de l'étape 114, une étape 115 consiste à superposer les parties superposables de la nouvelle image virtuelle $I_{2V}$ sur les parties correspondantes de l'image virtuelle cumulative ou mosaïque $I_{3V}$. La transparence affectée à chaque pixel de la nouvelle image virtuelle $I_{2V}$, permet de mémoriser le pixel à hauteur de son degré d'opacité. Le niveau de transparence par pixel permet d'estomper les pixels détectés différents entre deux instants de capture d'image réelle pour cause de bruit ou de correspondance à un obstacle. L'étape 115 réalise ainsi un filtrage temporel naturel en ne mémorisant cumulativement dans la mosaïque constituée par l'image virtuelle $I_{3V}$, que les pixels les plus fiables du point de vue de leur appartenance au plan du sol.

Ainsi, lorsque le véhicule avance lentement en marche avant pour se préparer à manoeuvrer, une vue du plan du solde type mosaïque, est progressivement créée à l'arrière du véhicule. Le système peut se dispenser de capteurs de vitesse du véhicule ou de rotation du volant de direction car les points d'intérêt qui sont générés permettent de détecter les déplacements en translation et en rotation du véhicule dans le plan du sol. Le système détecte naturellement que le véhicule s'arrête lorsque les points d'intérêt restent figés et que le véhicule change de sens de déplacement en fonction du sens de déplacement des points d'intérêt. Lorsque le véhicule recule, il parcourt en sens inverse le plan du sol précédemment scruté. Les parties de l'image virtuelle cumulative $I_{3V}$, précédemment à l'arrière du véhicule passent progressivement sous et sur les côtés du véhicule jusqu'à ce retrouver à l'avant du véhicule, reproduisant ainsi une vue de dessus d'un environnement qui entoure le véhicule. En quelque sorte, le véhicule en marche arrière pénètre virtuellement et progressivement dans l'image virtuelle et y évolue ensuite lorsqu'il vire ou repart en marche avant.

L'étape 112 est activée à la suite de l'étape 115 pour créer une vue d'affichage $I_{5V}$ à partir de l'image virtuelle cumulative $I_{3V}$ qui vient d'être construite sous forme de mosaïque. La vue d'affichage $I_{5V}$ n'est pas mémorisée. La vue d'affichage $I_{5V}$ est créée en ajoutant une image $I_4$ en surimpression sur l'image virtuelle $I_{3V}$.

L'image $I_4$ comprend notamment un exemplaire de la nouvelle image virtuelle $I_{2V}$, sans coefficient de transparence, de façon à permettre au conducteur du véhicule, un contrôle visuel direct de la scène, notamment si un être vivant passe derrière le véhicule dans le champ de la caméra réelle 10.

L'activation de l'étape 112 directement par la transition 111 ou indirectement par la transition 113 en passant par l'étape 115, remet à jour en temps réel la vue de l'interface homme machine (IHM) avec la vue issue de la caméra de recul. C'est la garantie que le conducteur puisse avoir en permanence un contrôle visuel sur sa manoeuvre.

Un déplacement du véhicule trop faible, ne peut pas être approximé avec précision par l'algorithme. Du fait de ce faible déplacement, la dernière image virtuelle $I_{2V}$ est plaquée sur la mosaïque précédente en prenant comme hypothèse que le véhicule n'a pas bougé. En revanche, la mosaïque n'est pas mise à jour, car de très faibles déplacements cumulés pourraient conduire à des dérives. Pour cette raison, il est nécessaire d'attendre que l'image courante présente suffisamment de différences avec l'ancienne image pour estimer avec suffisamment de précision le déplacement et recaler correctement la dernière image avec la mosaïque. En d'autre termes, si le véhicule ne bouge pas ou trop lentement pour que son mouvement puisse être estimé avec suffisamment de précision par l'algorithme, l'utilisateur continue d'avoir une vue réactualisée qui prend en compte une présence de piéton ou de tout obstacle mobile passant dans le champ de la caméra réelle, mais la mosaïque reste inchangée. Dès que le mouvement du véhicule est perceptible par l'utilisateur et par conséquent par l'algorithme, la mosaïque est mise à jour et recalée.

En entrant les données du véhicule telles que ses cotes, sa forme et sa couleur, sous formes de paramètres dans le système au moment de son montage sur le véhicule, il est possible d'afficher une épure du véhicule sur le plan du sol.

L'image $I_4$ comprend optionnellement une image de synthèse 3D d'objets en dehors du plan du sol qui peuvent constituer des obstacles à la manoeuvre. L'image de synthèse peut être construite par stéréoscopie temporelle à partir de deux images réelles $I_{1R}$ successives suffisamment distantes l'une de l'autre.

L'utilisation de capteurs ultrasons en complément du système, permet d'indiquer la proximité d'un obstacle dans la zone couverte par chaque capteur. La répartition des capteurs sur le pourtour du véhicule, par exemple au niveau des boucliers avant et arrière, permet de reconstruire une cartographie grossière de la proximité d'obstacles éventuels autour du véhicule.

L'information fournie par les capteurs à ultrasons, est utilisable par le système de différentes manières :

- de manière passive, les zones associées à chaque capteur à ultrasons, sont superposées graphiquement au dessus de l'image du sol. L'utilisateur dispose alors simultanément de l'information visuelle du sol autour du véhicule, et de l'information visuelle de présence d'obstacle retournée par les capteurs à ultrasons.
- de manière active, la présence d'obstacle déduite des transparences peut être comparée à la cartographie des obstacles qui est retournée par les capteurs à ultrasons. Ces informations peuvent alors être fusionnées pour obtenir davantage de précision.
- de manière combinée active et passive, l'affichage de la cartographie des obstacles fournie par les capteurs à ultrasons est superposée à l'image du sol, dans le cadre d'une indication visuelle passive. Par ailleurs, la présence d'un obstacle proche qui est détecté par les capteurs à ultrasons, est exploitée pour adapter la vue affichée de façon à la recentrer sur cette zone, réalisant ainsi un zoom adaptatif actif.

En ce qui concerne la manipulation de l'interface homme machine (IHM), plusieurs variantes sont prévues parmi lesquelles on indique une utilisation d'écrans tactiles, une utilisation d'un désignateur de type molette agencé pour sélectionner la vue active parmi un ensemble de choix prédéfinis, une utilisation de données d'entrées extérieures tel que le zoom adaptatif en fonction des obstacles détecté par les ultrasons.

Après un recul suffisant du véhicule, le procédé permet de connaître le plan du sol sous le véhicule et sur les côtés du véhicule. Il est alors possible de reproduire facilement une image tridimensionnelle de synthèse d'une roue dans un plan perpendiculaire au plan du sol environnant. Une roue avant peut être représentée avec son angle de braquage lorsque l'information pertinente est disponible, par exemple à partir de la messagerie du véhicule ou d'un calcul de la rotation du véhicule autour d'un axe perpendiculaire au plan qui résulte des déplacements des points caractéristiques sur les images virtuelles élémentaires $I_{2V}$.

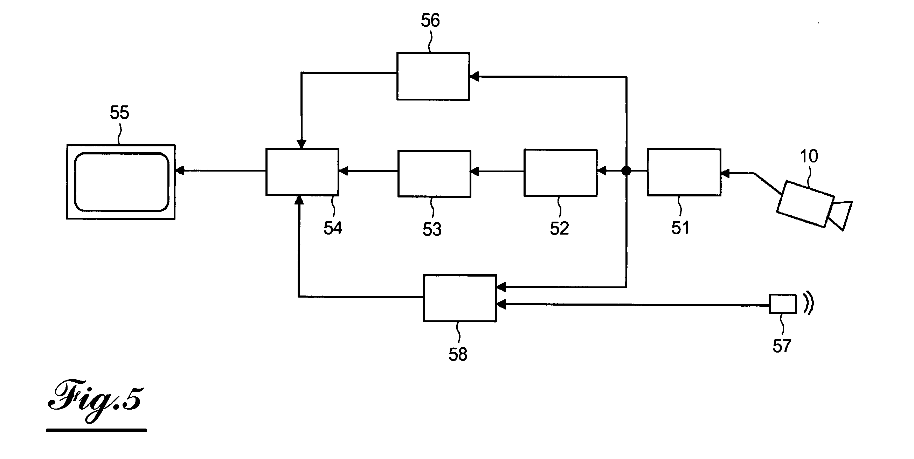

La figure 5 représente schématiquement un système pour mettre en oeuvre le procédé qui vient d'être expliqué.

La caméra 10 montée à l'arrière du véhicule comprend un plan réticulaire oblique par rapport au plan du sol comme on l'a vu ci-dessus en référence à la figure 4. Le plan réticulaire peut aller jusqu'à être perpendiculaire au plan du sol mais alors la surface visualisée du sol au voisinage du véhicule, est faible. A la différence des vues aériennes ou une caméra placée sous un avion permet d'avoir une vue du plan du sol conséquente grâce à l'altitude à laquelle l'avion survole le sol, une caméra placée sous le véhicule ou à l'arrière du véhicule avec un plan réticulaire parallèle à la surface du sol, n'embrasserai qu'un espace relativement restreint. Le plan réticulaire de la caméra non parallèle au plan du sol permet de couvrir un surface qui s'étend considérablement plus loin à l'arrière et sur les côtés du véhicule.

Chaque image vidéo capturée par la caméra 10 est transmise vers un module 51 à la cadence de rafraîchissement en temps réel. Le module 51 est agencé pour corriger les distorsions provoquées par le système optique de la caméra, notamment en présence d'un objectif à courte focale, encore nommé grand angle, qui permet d'avoir une zone de visibilité étendu de base de manière appréciable vers l'arrière et les côtés du véhicule.

Les images réelles qui sont traitées par le module 51, sont transmises à un module 52 qui calcule une vue de dessus comme expliqué ci-dessus. Le module 52 est essentiellement agencé pour exécuter les étapes 102 et 108 du procédé. On notera que les ressources particulièrement économiques, simple table de correspondance à entrée unique, permettent d'intégrer aisément les modules 51 et 52 dans la caméra 10. Optionnellement, on prévoit de transmettre les images réelles qui sont traitées par le module 51, à un module 56 et/ou à un modèle 58.

Le module 56 est agencé pour construire des objets en trois dimensions qui seront intégrés dans l'image affichée sur un écran 55 via un module d'affichage 54. Les objets peuvent être construits à partir des images reçues du module 51 et d'algorithmes de segmentation ou à partir de données géométriques et colorimétriques issues d'une base de données qui décrit par exemple la carrosserie du véhicule ou le montage des roues.

Le module 58 est aussi agencé pour construire des objets en trois dimensions qui seront intégrés dans l'image affichée sur l'écran 55 via le module d'affichage 54. Les objets peuvent sont ici construits à partir de signaux reçus d'un capteur 57 à ultrasons et éventuellement des images reçues du module 51.

Les images virtuelles élémentaires générée par le module 52, sont transmises à un module 53 agencé essentiellement pour exécuter les étapes 104, 105, 110 et 115 du procédé, de façon à construire l'image virtuelle cumulée qui étend la visibilité du sol sous et autour du véhicule.

L'image virtuelle construite dans le module 52, est transmise au module d'affichage 54 essentiellement agencé pour exécuter l'étape 112.

## Revendications

**1.** Procédé pour étendre une zone de visibilité obtenue au moyen d'une caméra montée sur un véhicule, comprenant :

- une étape (108) de création d'une image virtuelle élémentaire ($I_{2V}$) dans laquelle un ensemble de pixels de l'image virtuelle élémentaire est mis en correspondance avec un ensemble de pixels d'une image réelle ($I_{1R}$) capturée par la caméra, en considérant que l'ensemble de pixels de l'image réelle reproduit une surface plane du monde réel ;

- une étape (110) de caractérisation de l'image virtuelle élémentaire ($I_{2V}$) dans laquelle un ensemble de points d'intérêt de l'image virtuelle élémentaire ($I_{2V}$) est généré ;

- une étape (115) de construction d'une image virtuelle cumulative ($I_{3V}$) dans laquelle au moins une partie de l'image virtuelle élémentaire ($I_{2V}$) est superposée sur au moins une partie de l'image virtuelle cumulative ($I_{3V}$) en faisant coïncider des points d'intérêt de l'image virtuelle élémentaire ($I_{2V}$) avec des points d'intérêt de l'image virtuelle cumulative ($I_{3V}$) ; l'étape (115) de construction est réitérée pour chaque nouvelle image virtuelle élémentaire ($I_{2V}$) suffisamment différente d'une ancienne image virtuelle élémentaire ($@I_{2V}$) en termes de distances entre les points d'intérêt, ledit procédé étant **caractérisé en ce qu'**il comprend une étape (114) de différentiation dans laquelle on opère une différence en termes de composantes de couleur entre chaque pixel de la nouvelle image virtuelle élémentaire ($I_{2V}$) et un pixel correspondant de l'ancienne image virtuelle élémentaire ($@I_{2V}$) et dans laquelle on attribue audit pixel de la nouvelle image virtuelle élémentaire ($I_{2V}$), un niveau de transparence qui est fonction de ladite différence.

**2.** Procédé selon la revendication précédente, **caractérisé en ce que** dans l'étape (108) de création, l'ensemble de pixels de l'image virtuelle élémentaire est mis en correspondance avec l'ensemble de pixels de l'image réelle par une table de correspondance.

**3.** Procédé selon l'une des revendications précédentes, **caractérisé en ce qu'**il comprend une étape (112) d'affichage dans laquelle l'image virtuelle élémentaire telle qu'elle résulte de l'étape de création (108) est superposée en temps réel sur l'image virtuelle cumulative ($I_{3V}$) pour générer une image instantanée d'affichage ($I_{5V}$).

**4.** Procédé selon la revendication 3, **caractérisé en ce que** dans l'étape (112) d'affichage, une image de synthèse est superposée à l'image virtuelle cumulative ($I_{3V}$).

**5.** Procédé selon la revendication 4, **caractérisé en ce que** l'image de synthèse est celle d'une roue du véhicule.

**6.** Procédé selon l'une des revendications 3 à 5, **caractérisé en ce que** l'étape (112) d'affichage est activée directement après l'étape (110) de caractérisation de l'image virtuelle élémentaire ($I_{2V}$) pour chaque nouvelle image virtuelle élémentaire ($I_{2V}$) équivalente à une ancienne image virtuelle élémentaire ($@I_{2V}$) en termes de distances entre les points d'intérêt.

**7.** Procédé selon l'une des revendications précédentes, **caractérisé en ce que** la surface plane est celle du sol.

**8.** Procédé selon l'une des revendications précédentes, **caractérisé en ce que** la caméra utilisée comprend un plan rétinien oblique par rapport à ladite surface plane du monde réel.

**9.** Dispositif comprenant une caméra montée sur un véhicule, **caractérisé en ce qu'**il est agencé pour mettre en oeuvre le procédé selon l'une quelconque des revendications précédentes.

**Claims**

**1.** Method for extending a visibility area of a camera mounted on a vehicle, comprising:

- a step (108) of generating a basic virtual image ($I_{2V}$) in which a set of pixels of the basic virtual image is correlated with a set of pixels of a real image ($I_{1R}$) captured by the camera while taking into account that the set of pixels of the real image reproduces a planar surface of the real world;

- a step (110) of characterising the basic virtual image ($I_{2V}$) in which a set of points of interest of the basic virtual image ($I_{2V}$) is generated;

- a step (115) of building a virtual cumulative image ($I_{3V}$) in which at least a portion of the basic virtual image ($I_{2V}$) is superimposed on at least a portion of the cumulative virtual image ($I_{3V}$) while coinciding the points of interest of the basic virtual image ($I_{2V}$) with the points of interest of the virtual cumulative image ($I_{3V}$); the step (115) of building is reiterated for each new basic virtual image ($I_{2V}$) that is sufficiently different from an old basic virtual image ($@I_{2V}$) in terms of distances between the points of interest, said method **characterised in that** it comprises a step (114) of differentiating in which a difference is made in terms of colour components between each pixel of the new basic virtual image ($I_{2V}$) and a corresponding pixel of the old basic virtual image (@$I_{2V}$) and in which a level of transparency which is according to said difference is attributed to said pixel of the new basic virtual image ($I_{2V}$).

2. Method according to the preceding claim, **characterised in that** in the step (108) of generating, the set of pixels of the basic virtual image is correlated with the set of pixels of the real image via a table of correspondence.

3. Method according to one of the preceding claims, **characterised in that** it comprises a step (112) of displaying in which the basic virtual image such as results from the step of generating (108) is superimposed in real time on the virtual cumulative image ($I_{3V}$) in order to generate an instant display image ($I_{5V}$).

4. Method according to claim 3, **characterised in that** in the step (112) of displaying, a generated image is superimposed on the virtual cumulative image ($I_{3V}$).

5. Method according to claim 4, **characterised in that** the generated image is that of a wheel of a vehicle.

6. Method according to one of claims 3 to 5, **characterised in that** the step (112) of display is activated directly after the step (110) of characterising of the basic virtual image ($I_{2V}$) for each new basic virtual image ($I_{2V}$) equivalent to an old basic virtual image (@$I_{2V}$) in terms of distances between the points of interest.

7. Method according to one of the preceding claims, **characterised in that** the planar surface is that of the ground.

8. Method according to one of the preceding claims, **characterised in that** the camera used comprises a retinal plane that is slanted in relation to said planar surface of the real world.

9. Device comprising a camera mounted on a vehicle, **characterised in that** it is arranged in order to implement the method according to any of the preceding claims.

**Patentansprüche**

1. Verfahren zum Erweitern eines Sichtfeldes, das man durch eine auf einem Fahrzeug montierte Kamera erhält, umfassend:

- einen Schritt (108) zur Erstellung eines elementaren virtuellen Bildes ($I_{2V}$), in dem eine Menge an Pixeln des elementaren virtuellen Bildes einer Menge an Pixeln eines realen Bildes ($I_{IR}$), das von der Kamera aufgenommen wird, unter der Annahme zugeordnet wird, dass die Menge an Pixeln eines realen Bildes eine ebene Fläche der realen Welt abbildet;
- einen Schritt (110) der Charakterisierung des elementaren virtuellen Bildes ($I_{2V}$), in dem eine Menge an wichtigen Punkten des elementaren virtuellen Bildes ($I_{2V}$) generiert wird;
- einen Schritt (115) zum Aufbau eines kumulativen virtuellen Bildes ($I_{3V}$), in dem sich zumindest ein Teil des elementaren virtuellen Bildes ($I_{2V}$) über zumindest einen Teil des kumulativen virtuellen Bildes ($I_{3V}$) schiebt, wodurch wichtige Punkte des elementaren virtuellen Bildes ($I_{2V}$) mit wichtigen Punkten des kumulativen virtuellen Bildes ($I_{3V}$) zusammenfallen; der Aufbauschritt (115) wird bei jedem neuen elementaren virtuellen Bild ($I_{2V}$) wiederholt, das sich in Bezug auf die Abstände zwischen den wichtigen Punkten in ausreichendem Maße von einem früheren elementaren virtuellen Bild (@$I_{2V}$) unterscheidet, und das besagte Verfahren **dadurch gekennzeichnet ist, dass** es einen Differenzierungsschritt (114) umfasst, bei dem man eine Unterscheidung in Bezug auf die Farbkomponenten zwischen jedem Pixel des neuen elementaren virtuellen Bildes ($I_{2V}$) und einem entsprechenden Pixel des früheren elementaren virtuellen Bildes (@$I_{2V}$) vornimmt, und bei dem man dem besagten Pixel des neuen elementaren virtuellen Bildes ($I_{2V}$) eine Transparenzstufe zuordnet, die von der besagten Unterscheidung abhängt.

2. Verfahren nach dem vorherigen Anspruch, **dadurch gekennzeichnet, dass** im Erstellungsschritt (108) die Menge an Pixeln des elementaren virtuellen Bildes der Menge an Pixeln des reellen Bildes durch eine Entsprechungstabelle zugeordnet wird.

3. Verfahren nach einem der vorherigen Ansprüche, **dadurch gekennzeichnet, dass** es einen Anzeigeschritt (112) umfasst, in dem das elementare virtuelle Bild, so wie es aus dem Erstellungsschritt (108) hervorgeht, in Echtzeit über das kumulative virtuelle Bild ($I_{3V}$) geschoben wird, um ein momentanes Anzeigebild ($I_{5V}$) zu generieren.

4. Verfahren nach Anspruch 3, **dadurch gekennzeichnet, dass** im Anzeigeschritt (112) eine Computergrafik über das kumulative virtuelle Bild ($I_{3V}$) geschoben wird.

5. Verfahren nach Anspruch 4, **dadurch gekennzeichnet, dass** die Computergrafik die Abbildung eines Fahrzeugrades ist.

6. Verfahren nach einem der Ansprüche 3 bis 5, **dadurch gekennzeichnet, dass** der Anzeigeschritt (112) unmittelbar nach dem Schritt (110) zur Charakterisierung des elementaren virtuellen Bildes ($I_{2V}$) bei jedem neuen elementaren virtuellen Bild ($I_{2V}$) aktiviert wird, das in Bezug auf die Abstände zwischen den wichtigen Punkten gegenüber einem früheren elementaren virtuellen Bild (@$I_{2V}$) gleichwertig ist.

7. Verfahren nach einem der vorherigen Ansprüche, **dadurch gekennzeichnet, dass** die ebene Fläche jene des Bodens ist.

8. Verfahren nach einem der vorherigen Ansprüche, **dadurch gekennzeichnet, dass** die verwendete Kamera eine Retinalebene umfasst, die im Verhältnis zur besagten ebenen Fläche der realen Welt schräg verläuft.

9. Vorrichtung umfassend eine Kamera, die auf einem Fahrzeug montiert ist, **dadurch gekennzeichnet, dass** sie so angeordnet ist, um das Verfahren nach irgendeinem der vorherigen Ansprüche anzuwenden.

60

*Fig.1*

50

50

60

10

*Fig.2*

*Fig.3*

*Fig.4*

EP 2 432 660 B1

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1830321 A2
- EP 1094337 A